(19) Europäisches Patentamt
European Patent Office
Office européen des brevets

(11) Veröffentlichungsnummer: **0 439 021 B1**

(12) # EUROPÄISCHE PATENTSCHRIFT

(45) Veröffentlichungstag der Patentschrift: **17.05.95**

(51) Int. Cl.[6]: **C08F 220/32**, C08F 220/28, C08F 212/08, C09D 125/08

(21) Anmeldenummer: **91100233.5**

(22) Anmeldetag: **09.01.91**

Die Akte enthält technische Angaben, die nach dem Eingang der Anmeldung eingereicht wurden und die nicht in dieser Patentschrift enthalten sind.

(54) **Copolymerisatlösungen auf der Basis von Additionsprodukten alpha,beta-ungesättigter Carbonsäure mit Glycidylestern und damit mischpolymerisierbarer alpha,beta-ungesättigter Monomerer.**

(30) Priorität: **20.01.90 DE 4001579**

(43) Veröffentlichungstag der Anmeldung:
**31.07.91 Patentblatt 91/31**

(45) Bekanntmachung des Hinweises auf die Patenterteilung:
**17.05.95 Patentblatt 95/20**

(84) Benannte Vertragsstaaten:
**BE DE FR GB IT NL**

(56) Entgegenhaltungen:
**EP-A- 0 320 719**
**FR-A- 2 349 607**
**FR-A- 2 442 867**

(73) Patentinhaber: **SYNTHOPOL CHEMIE Dr. rer. pol. Koch GmbH & CO. KG**
**Alter Postweg 35**
**D-21614 Buxtehude (DE)**

(72) Erfinder: **Dalibor, Horst, Dr. Dipl.-Chem.**
**Waldschneise 4**
**Hamburg-Norderstedt (DE)**

**EP 0 439 021 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Copolymerisatlösungen, enthaltend Copolymerisate auf der Basis von Additionsprodukten $\alpha$, $\beta$-ungesättigter Carbonsäure mit Glycidylestern und damit mischpolymerisierbarer $\alpha,\beta$-ungesättigter Monomerer mit und ohne Hydroxylgruppen. Sie betrifft auch die Herstellung derartiger hydroxylgruppenhaltiger Copolymerisate und ihre Verwendung in klaren oder pigmentierten Überzugsmitteln.

Hydroxylgruppenhaltige Copolymerisate auf der Basis von (Meth)acrylaten und Umsetzungsprodukten aus Acrylsäure und Glycidylestern von $\alpha$ Alkylalkanmonocarbonsäuren und/oder $\alpha,\alpha$-Dialkylalkanmonocarbonsäuren, die mit organischen Polyisocyanaten zu Überzugsmitteln verarbeitet werden können, sind bekannt. In der DE-AS 16 68 510 werden Copolymerisate aus Additionsprodukten $\alpha,\beta$-ethylenisch ungesättigter Carbonsäuren mit Glycidylestern und damit mischpolymerisierbaren $\alpha,\beta$-ungesättigten Monomeren mit und ohne Hydroxylgruppen beschrieben. Die DE-PS 26 03 259 gibt Reaktionslacke an, die spezielle Bindemittel enthalten. Es handelt sich um Mischpolymerisate auf der Basis von Styrol, Methylmethacrylat, Acrylsäure und Glycidylestern von $\alpha$-Alkylalkanmonocarbonsäuren und/oder $\alpha,\alpha$-Dialkylalkanmonocarbonsäuren, die durch Erhitzen unter gleichzeitiger Veresterung und Polymerisation in inerten Lösungsmitteln in Anwesenheit von Polymerisationsinitiatoren gegebenenfalls mit Kettenabbrechern erhalten werden.

Die besonderen Schwierigkeiten, die sich bei der Herstellung von Copolymerisatlösungen der vorstehend erläuterten Art ergeben können, sind vom Erfinder ausführlich in der DE-PS 28 51 615, Spalte 2, Zeile 66 bis Spalte 4, Zeile 12 diskutiert worden, wobei als Stand der Technik die DE-PS 10 38 745, FR-PS 13 90 572, DE-OS 20 54 231, CH-PS 52 39 61, DE-OS 20 21 141, DE-PS 26 26 900, DE-AS 26 03 259, DE-AS 26 59 853, CH-PS 51 95 32, DE-OS 25 15 705, DE-OS 26 03 624, DE-OS 26 18 809, DE-OS 20 65 770 und DE-OS 16 68 510 in Betracht gezogen worden sind.

Der Festkörper in den Copolymerisatlösungen gemäß dem Stand der Technik beträgt nach beendeter gleichzeitiger Veresterung und Copolymerisation höchstens 55 Gew.-% und gemäß DE-OS 37 40 774 Seite 4 (Komponente A) etwa 65 Gew.-%, obwohl dort ein besonders hoher Festkörper angestrebt wird.

Aufgabe der Erfindung ist es

1. Copolymerisatlösungen zur Verfügung zu stellen, die einen wesentlich erhöhten Festkörper aufweisen,
2. Verfahren zur Herstellung der neuen Copolymerisatlösungen zur Verfügung zu stellen,
3. Die aus den neuen Copolymerisatlösungen erhältlichen Bindemittel sollen beim Einsatz mit zwei- und/oder mehrwertigen Polyisocyanaten einen erhöhten Festkörpergehalt bei vergleichbarer Viskosität besitzen. Dies bedeutet, daß die aus den Copolymerisatlösungen bzw. dem Bindemittel der Erfindung hergestellten Reaktionslacke in kurzer Zeit als Überzug aufgebracht werden können, z.B. durch Weglassen eines oder mehrerer Spritzgänge. Weiterhin sollen durch den höheren Festkörper in den fertigen Reaktionslacken weniger organische Lösungsmittel an die Umwelt abgegeben werden.
4. Die Copolymerisatlösungen bzw. die Bindemittel sollen in Verbindung mit aliphatischen Polyisocyanaten luft- und ofentrocknende festkörperreiche Zweikomponentenlacke mit hoher mechanischer Widerstandsfähigkeit, Chemikalien- und Wetterbeständigkeit ergeben.
5. Die Bereitstellung von Copolymerisatlösungen bzw. Bindemitteln bzw. klaren oder pigmentierten Überzugsmitteln mit erhöhtem Festkörpergehalt, die zu Überzügen mit hohem Glanz, guter Fülle, gutem Verlauf, weniger Umweltbelastung und einer verbesserten Verarbeitungssicherheit führen.
6. Die Copolymerisatlösungen bzw. die Bindemittel sollen zu Reaktionslacken verarbeitbar sein, die sowohl als Autoserienerstlackierungen als auch Autoreparaturlackierungen hervorragend geeignet sind.

Es hat sich gezeigt, daß diese Aufgabe durch die Bereitstellung einer Copolymerisatlösung gelöst wird, die inerte organische Lösungsmittel und hydroxylgruppenhaltige Copolymerisate auf der Basis von Additionsprodukten $\alpha,\beta$-ungesättigter Carbonsäure mit Glycidylestern und damit mischpolymerisierbarer $\alpha,\beta$-ungesättigter Monomerer mit und ohne Hydroxylgruppen enthält, dadurch gekennzeichnet, daß die Copolymerisatlösung die Komponenten

A) 15,0 - 50,0 Gew.-% von in der Lackindustrie üblichen inerten organischen Lösungsmitteln,
B) 50,0 - 85,0 Gew.-% hydroxylgruppenhaltige Copolymerisate enthält, die erhältlich ist durch gleichzeitige

Additionsproduktbildung und Polymerisation in inerten organischen Lösungsmitteln oder deren Gemischen, die einen Siedebereich zwischen 160 °C bis 200 °C aufweisen, durch Erhitzen unter Rückflußkühlung in Anwesenheit von Polymerisationsinitiatoren, aus

a) 20 bis 30 Gew.-% Glycidylester von $\alpha$-Alkylalkanmonocarbonsäuren und/oder $\alpha,\alpha$-Dialkylalkanmonocarbonsäuren,
b) 8 bis 12 Gew.-% Methacrylsäure,
c) 15 bis 27 Gew.-% Hydroxyalkylmethacrylat mit 1 bis 6 C-Atomen im Hydroxyalkylrest,
d) 30 bis 53 Gew.-% Styrol,

e) 1 bis 5 Gew.-% Polypropylenglycolmonomethacrylat mit einem mittleren Molekulargewicht von 350 bis 387,

f) 0 bis 20 Gew.-% Alkylmethacrylat mit 1 bis 8 C-Atomen im Alkylrest, wobei die Summe der Komponenten jeweils 100 Gew.-% beträgt.

Eine spezielle Ausführungsform des Copolymerisates ist erhältlich aus

a) 20 bis 30 Gew.-% Glycidylester von α-Alkylalkanmonocarbonsäuren und/oder α,α-Dialkylalkanmonocarbonsäuren,

b) 8 bis 12 Gew.-% Methyacrylsäure,

c) 15 bis 26 Gew.-% 2-Hydroxyethylmethacrylat,

d) 33 bis 52 Gew.-% Styrol,

e) 1 bis 3 Gew.-% Polypropylenglycolmonomethacrylat mit einem mittleren Molekulargewicht von 350 bis 387,

f) 0 bis 20 Gew.-% Methylmethacrylat, wobei die Summe der Komponenten jeweils 100 Gew.-% beträgt.

Eine bevorzugte Ausführungsform des Copolymerisates ist erhältlich aus

a) 20 bis 26 Gew.-% Glycidylester von α-Alkylalkanmonocarbonsäuren und/oder α,α-Dialkylalkanmonocarbonsäuren

b) 8 bis 12 Gew.-% Methacrylsäure,

c) 17 bis 22 Gew.-% 2-Hydroxyethylmethacrylat,

d) 33 bis 38 Gew.-% Styrol,

e) 1 bis 3 Gew.-% Polypropylenglycolmonomethacrylat mit einem mittleren Molekulargewicht von 350 bis 387,

f) 8 bis 12 Gew.-% Methylmethacrylat, wobei die Summe der Komponenten jeweils 100 Gew.-% beträgt.

Eine andere bevorzugte Ausführungsform der Copolymerisatlösung ist erhältlich aus

a) 22 bis 25 Gew.-% Glycidylester von α-Alkylalkanmonocarbonsäuren und/oder α,α-Dialkylalkanmonocarbonsäuren,

b) 8 bis 12 Gew.-% Methacrylsäure,

c) 17 bis 21 Gew.-% 2-Hydroxyethylmethacrylat,

d) 44 bis 48 Gew.-% Styrol,

e) 1 bis 3 Gew.-% Polypropylenglycolmonomethacrylat mit einem mittleren Molekulargewicht von 350 bis 387, wobei die Summe der Komponenten jeweils 100 % beträgt.

Die bevorzugteste Ausführungsform der vorstehenden Copolymerisatlösungen ist dadurch gekennzeichnet, daß diese nach ihrer Herstellung aus

A) 15,0 - 25,0 Gew.-%, bevorzugt 15 bis 20 Gew.-%, von in der Lackindustrie üblichen inerten Lösungsmitteln bevorzugt mit Siedepunkten von 190 °C bis 200 °C und

B) 75,0 - 85,0 Gew.-%, bevorzugt 85 bis 80 Gew.-% hydroxylgruppenhaltigen Copolymerisaten besteht.

Es hat sich gezeigt, daß eine derartige Copolymerisatlösung beim Einsatz mit zwei- und/oder mehrwertigen Polyisocyanaten einen im Vergleich mit dem Stand der Technik erhöhten Festkörpergehalt bei vergleichbarer Viskosität bzw. eine erniedrigte Viskosität bei gleichem Festkörpergehalt ergibt. Es weist darüber hinaus lacktechnische Vorteile, wie verbesserten Glanz, Fülle, Verlauf, Verarbeitungssicherheit bei High-Solid-Gehalt sowie bessere Umwelteigenschaften auf.

Die Herstellung der erfindungsgemäßen Copolymerisatlösung kann durch Lösungspolymerisation durchgeführt werden. Bei diesem Verfahren werden die Lösemittel und die Glycidylester von α-Alkylalkanmonocarbonsäuren und/oder α,α-Dialkylalkanmonocarbonsäuren in das Reaktionsgefäß vorgelegt, auf Siedetemperatur erhitzt und das Gemisch bzw. die Gemische aus Monomeren, gegebenenfalls Carboxy-Epoxy-Katalysatoren und Initiator kontinuierlich in etwa 12 bis 20 Stunden zudosiert. Nach Zulaufende wird durch Halten auf Polymerisationstemperatur während 2 bis 5 Stunden nachpolymerisiert bis die Umsetzung praktisch vollständig ist. Die Polymerisation wird bei Temperaturen zwischen 160 °C und 195 °C, vorzugsweise bei 165 °C bis 195 °C durchgeführt.

Ganz allgemein ist die Copolymerisatlösung der Erfindung erhältlich durch Erhitzen des Gemisches, bestehend aus der Komponente A und dem Monomer a) der Komponente B, als Vorlage im Reaktionsgefäß, in die bei Polymerisationstemperatur entsprechend dem Fortschritt der Polymerisation und gleichzeitig ablaufenden Additionsproduktbildung als Zulauf man die erforderlichen Monomeren b), c), d), e), gegebenenfalls f), Polymerisationsinitiatoren, gegebenenfalls Kettenüberträger, gegebenenfalls Carboxy-Epoxy-Katalysatoren, allmählich einlaufen läßt und nach Beendigung des Zulaufs - falls erforderlich - noch auf Polymerisationstemperatur hält, bis durch Nachpolymerisation die Umsetzung beendet ist.

In einer bevorzugten Ausführungsform, die durch die Beispiele verdeutlicht wird, wird ein Gemisch von inerten Lösungsmitteln vorgelegt und unter Rückfluß zum Sieden erhitzt, wobei die inerten Lösungsmittel so ausgewählt vorliegen, daß diese unter Rückflußkühlung bei etwa 195 °C sieden. Nach dem Start der Copolymerisation und gegen Ende der Zulaufzeit fällt die Siedetemperatur der Copolymerisatlösung auf etwa 172 °C bis 165 °C ab. Nach Zulaufende wird dann noch bei 160 °C bis etwa 172 °C nachpolymerisiert bis die Umsetzung praktisch vollständig ist und der gewünschte Festkörpergehalt vorliegt (in den Beispielen 81,5 bis 82,1 % Festkörper).

Die Polymerisationsreaktion wird mit bekannten Polymerisationsinitiatoren gestartet. Geeignete Initiatoren sind z.B. Peroxide, die in der einer Reaktion 1. Ordnung thermisch in Radikale zerfallen. Initiatorart und -menge werden so gewählt, daß bei der Polymerisationstemperatur während der Zulaufphase ein möglichst konstantes Radikalangebot vorliegt.

Bevorzugt eingesetzte Initiatoren für die Polymerisation sind: Dialkylperoxide, wie Di-tert.-Butylperoxid, Di-cumylperoxid; Hydroperoxide, wie Cumolhydroperoxid, tert.-Butylhydroperoxid; Perester, wie tert.-Butylperbenzoat, tert.-Butyl-per-3,5,5-trimethylhexanoat, tert.-Butyl-per-2-ethylhexanoat.

Die Polymerisationsinitiatoren, insbesondere tert.-Butyl-per2-ethylhexanoat werden bevorzugt in einer Menge von 2 bis 6 Gew.-%,bezogen auf die Monomeren-Einwaage zugesetzt.

Zur Regelung des Molekulargewichts können Kettenüberträger mitverwendet werden. Beispiele sind Mercaptane, Thioglykolsäureester, Chlorkohlenwasserstoffe, bevorzugt wird Dodecylmercaptan eingesetzt.

Als Lösungsmittel können in der Lackindustrie übliche inerte Lösemittel einzeln, bevorzugt im Gemisch, mit Siedepunkten von 160 °C bis 200 °C, bevorzugt 190 °C bis 200 °C, für die Lösungspolymerisation eingesetzt werden. Bevorzugt eignen sich solche organischen Losemittel, die dann später auch in den fertigen Überzugsmitteln eingesetzt werden. Beispiele für solche Lösemittel sind: Glykolether, wie Ethylenglykoldimethylether; Glykoletherester, wie Ethylglykolacetat, Butylglykolacetat, 3-Methoxy-n-butylacetat, Butyldiglykolacetat, Methoxypropylacetat; Ester, wie Butylacetat, Isobutylacetat, Amylacetat; und Ketone, wie Methylethylketon, Methylisobutylketon, Diisobutylketon, Cyclohexanon, Isophoron, Aromatische Kohlenwasserstoffe, wie Xylol. Shellsol A (eingetragenes Warenzeichen für aromatische Kohlenwasserstoffgemische) und aliphatische Kohlenwasserstoffe können ebenfalls im Verschnitt mit den oben genannten Lösemitteln eingesetzt werden. Bevorzugt wird ein Gemisch aus Butylglykolacetat, Shellsol A und Ethoxypropylacetat im Gew.-Verhältnis 1:2:2 verwendet.

Als Komponente a) werden zur Herstellung der erfindungsgemäßen hydroxylgruppenhaltigen Copolymerisatlösungen

Glycidylester von $\alpha$-Alkylalkanmonocarbonsäuren und/oder $\alpha,\alpha$-Dialkylalkanmonocarbonsäuren eingesetzt. Bevorzugt handelt es sich um solche der Summenformel $C_{13}H_{24}O_3$ einzeln oder im Gemisch.

Da dem Glycidylrest im Glycidylester solcher $\alpha$-Alkylalkanmonocarbonsäuren und/oder $\alpha,\alpha$-Dialkylalkanmonocarbonsäuren die Summenformel $C_3H_5O$ zukommt, sind die $\alpha$-Alkylalkanmonocarbonsäuren und $\alpha,\alpha$-Dialkylalkanmonocarbonsäuren Isomerengemische von solchen Monocarbonsäuren, die eine $C_{10}$-Kette enthalten. Die Säuren sind dabei bevorzugt völlig gesättigt und am $\alpha$-ständigen Kohlenstoffatom sehr stark substituiert; Beispiele hierfür werden in "Deutsche Farbenzeitschrift", Heft 10/16. Jahrgang, Seite 435, beschrieben.

Als Hydroxyalkylmethacrylate mit 1 bis 6-C-Atomen im Hydroxyalkylrest sind Hydroxymethacrylat, 2-Hydroxyethylmethacrylat, 2-Hydroxypropylmethacrylat, 4-Butandiolmonomethacrylat, 5-Pentandiolmonomethacrylat, Cyclohexandiolmonomethacrylat und 4-Dihydroxymethylcyclohexanmonomethacrylat, einzeln oder im Gemisch, geeignet, bevorzugt wird 2-Hydroxyethylmethacrylat verwendet.

Als Carboxy-Epoxy-Katalysatoren auf der Basis einer Alkalimetallverbindung können alle Natrium-, Lithium-, Kalium-, Rubidium- und Cäsiumverbindungen - einzeln oder im Gemisch - eingesetzt werden, die im Reaktionsgemisch aus Methacrylsäure, Monoglycidylverbindung und Vinylverbindungen löslich sind und zumindest bei der Zugabe und/oder beim Halten des Reaktionsansatzes auf Reaktionstemperatur zwecks Veresterung durch Addition bei gleichzeitiger Copolymerisation in Lösung gehen, wobei die eingesetzte Alkaliverbindung jedoch frei von solchen Bestandteilen sein soll, die bei der Copolymerisation des Additionsproduktes, das einen Ester darstellt, sich ungünstig auswirken können.

Brauchbar sind beispielsweise die Carbonate, Bicarbonate, Formiate , Jodide, Bromide, Fluoride und die Hydroxyde der vorstehend genannten Alkalimetalle. Im Fabrikmaßstab haben sich am besten Lithiumhydroxyd und Kaliumhydroxyd - einzeln oder im Gemisch - bewährt.

Bei der Verwendung im Fabrikmaßstab wird hierbei auf Grund des billigen Preises und der vorzüglichen Katalysatoreneigenschaften das Kaliumhydroxyd besonders vorteilhaft eingesetzt. Zweckmäßig wird das eingesetzte Alkalihydroxyd bzw. die Alkaliverbindung oder deren Gemische in der zu veresternden Methacrylsäure aufgelöst. Man kann aber auch aus der Alkaliverbindung, z.B. Alkalihydroxyden, Alkalicarbonaten oder Alkalibicarbonaten, und der Methacrylsäure erst ihr Alkalisalz als Katalysator herstellen und kann dann

das Alkalisalz der Methacrylsäure in dem Reaktionsgemisch lösen bzw. bei der Durchführung der Additionsreaktion durch Erhitzen in Lösung bringen.

Im allgemeinen ist es ausreichend, von etwa 0,005 Gew.-% bis etwa 0,5 Gew.-% Alkalimetallverbindung der schon genannten Art, bzogen auf das Gewicht der esterbildenden Komponenten, für die Additionsreaktion zuzufügen. Bevorzugt wird jedoch ein Zusatz von etwa 0,01 Gew.-% bis etwa 0,3 Gew.-% Alkalimetallverbindung.

Der bevorzugteste Bereich für den Zusatz beträgt etwa 0,02 Gew.-% bis 0,1 Gew.-% Alkalimetallverbindungen, wobei von den Alkalimetallverbindungen dann Kalium- und Lithiumverbindungen ganz besonders vorteilhaft Verwendung finden.

Spezielle Untersuchungen haben gezeigt, daß bei der Verwendung eines Alkali-Carboxy-Epoxy-Katalysators, vorzugsweise Alkali-Hydroxyd, -carbonat und -bicarbonat bei der Herstellung der Copolymerisatlösung in den daraus mit Polyisocyanaten erhältlichen Beschichtungsmitteln besondere, nicht zu erwartende Effekte auftreten. So haben derartige Reaktionslacke eine längere Topfzeit und die daraus hergestellten Beschichtungen besitzen ein besseres Alterungsverhalten hinsichtlich des Elastizitätsabbaus.

Die erfindungsgemäßen Copolymerisatlösungen können zu klaren oder pigmentierten Überzugsmitteln verarbeitet werden. Hierzu werden sie in Lösungsmitteln mit gegebenenfalls lacküblichen Zusatz- und Hilfsstoffen mit einem üblichen Lack-Polyisocyanat versetzt. Dabei werden bevorzugt 60,0 bis 80,0 Gew.-% des hydroxylgruppenhaltigen Copolymerisats B mit 20 bis 40 Gew.-% zwei- und/oder mehrwertigem Polyisocyanat, als Komponente C bezeichnet, versetzt; die Summe der Komponenten B und C beträgt jeweils 100 %.

Die zur Vernetzung des erfindungsgemäßen Copolymerisats B verwendbaren Polyisocyanate C sind lacktypische Polyisocyanate.

Der Anteil an Polyisocyanat-Vernetzer wird so gewählt, daß auf eine Hydroxylgruppe der Bindemittelmischung 0,5 bis 1,5 Isocyanat-Gruppen entfallen. Überschüssige Isocyanat-Gruppen können durch Feuchtigkeit abreagieren und zur Vernetzung beitragen.

Es können aliphatische, cycloaliphatische und aromatische Polyisocyanate verwendet werden wie Hexamethylendiisocyanat, Trimethylhexamethylendiisocyanat, Isophorondiisocyanat, 4,4'Diisocyanatodicyclohexylmethan, Toluylen-2,4-diisocyanat,o-,m- und p-Xylylendiisocyanat, 4,4'-Diisocyanatodiphenylmethan; verkappte Polyisocyanate, wie mit CH-, NH- oder OH-aciden Verbindungen verkappte Polyisocyanate; sowie z.B. Biuret-, Allophanat, Urethan- oder Isocyanurat-Gruppen enthaltende Polyisocyanate Beispiele für derartige Polyisocyanate sind ein Biuretgruppen enthaltendes Umsetzungsprodukt aus 3 Molen Hexamethylendiisocyanat mit 1 Mol Wasser mit einem NCO-Gehalt von ca. 22 % (entsprechend dem Handelsprodukt Desmodur N BAYER AG, eingetragenes Warenzeichen); ein Isocyanatgruppen enthaltendes Polyisocyanat, das durch Trimerisierung von 3 Molen Hexamethylendiisocyanat hergestellt wird mit einem NCO-Gehalt von etwa 21,5 % (entsprechend dem Handelsprodukt Desmodur N 3390 BAYER AG, eingetragenes Warenzeichen) oder Urethangruppen enthaltende Polyisocyanate, welche Reaktionsprodukte darstellen aus 3 holen Toluylendiisocyanat und 1 Mol Trimethylolpropan mit einem NCO-Gehalt von etwa 17,5 % (entsprechend dem Handelsprodukt Desmodur L BAYER AG, eingetragenes Warenzeichen).

Bevorzugt eingesetzt werden Desmodur N und Desmodur N 3390, BAYER AG, eingetragenes Warenzeichen.

Aus den Komponenten B und C werden, wie vorstehend erwähnt, transparente oder pigmentierte Überzugsmittel hergestellt. Transparente Überzugsmittel finden z.B. Verwendung als Klarlacke in einer 2-Schicht-Lackierung, die sich zusammen aus einer Pigmente enthaltenden Basisschicht und einer transparenten Deckschicht, die im Naß-in-Naß-Verfahren appliziert und anschließend entweder an der Luft oder in Einbrennöfen gehärtet werden. Diese Klarlacke enthalten neben üblichen Lösemitteln zur Einstellung der Spritzviskosität gegebenenfalls übliche Verlaufs- und Lichtschutzmittel, sowie andere übliche lacktechnische Zusatzstoffe.

Zur Herstellung pigmentierter Überzugsmittel werden die Einzelbestandteile miteinander vermischt und in üblicher Weise homogenisiert bzw. vermahlen. Beispielsweise kann so vorgegangen werden, daß zunächst ein Teil der Copolymerisatlösung mit gegebenenfalls vorhandenen Pigmenten und lacküblichen Hilfsstoffen und Lösemitteln vermischt und in Mahlaggregaten angerieben wird.

Danach wird das Mahlgut mit der restlichen Copolymerisatlösung komplettiert.

Die aus der erfindungsgemäßen hydroxylgruppenhaltigen Copolymerisatlösung erhaltenen Überzugsmittel weisen den großen Vorteil eines hohen Festkörpergehalts bei relativ geringer Viskosität auf. Ihre Verlaufseigenschaften sind ausgezeichnet, und sie führen zu Überzügen mit ausgezeichnetem Glanz und hervorragender Fülle. Die erhaltenen Überzüge sind sehr rasch montagefest und können kurz nach dem Auftrag auf ein Klebeband abgeklebt werden, um beispielsweise eine Mehrfachlackierung zu ermöglichen. Die aus den erfindungsgemäßen Copolymerisatlösungen erhältlichen Überzugsmittel sind somit besonders

in der Kraftfahrzeugindustrie zur Lackierung von Kraftfahrzeugkarossen, jedoch auch auf dem Reparatursektor zur raschen Ausbesserung von beispielsweise Unfallschäden geeignet.

Die folgenden Beispiele dienen zur Erläuterung der Erfindung.

Herstellung der Copolymerisatlösung

In einen 4-l-Dreihalskolben, der mit einem Rührwerk, Kontaktthermometer, Kugelkühler und 2 Tropftrichtern ausgerüstet ist, wird Bestandteil I entsprechend den Mengenangaben in der nachfolgenden Tabelle vorgelegt und unter Rühren bei eingeschalteter Rückflußkühlung auf 194 °C erhitzt.

Innerhalb von 16 Stunden wird Bestandteil II (Monomerengemisch und KOH als Carboxy-Epoxy-Katalysator und Kettenübertragungsmittel) und Bestandteil III (Lösungsmittel-Initiatorgemisch) kontinuierlich aus den Tropftrichtern 1 und 2 zudosiert. Die Temperatur fällt von 194 °C gegen Ende der Zulaufzeit auf 171 bis 165 °C ab. Nach Zulaufende wird anschließend 3 Stunden bei 160 bis 172 °C nachpolymerisiert, so daß die Umsetzung praktisch vollständig ist.

Tabelle
(Einwaage in Gramm)

| | | Copolymerisat 1 | Copolymerisat 2 | Copolymerisat 3 |
|---|---|---|---|---|
| Bestandteil | | | | |
| I | Butylglycolat | 100 | 100 | 100 |
| | Ethoxypropylacetat | 160 | 160 | 160 |
| | Gemisch aromatischer Kohlenwasserstoffe (Shellsol A, eingetragenes Warenzeichen) | 200 | 200 | 200 |
| | Glycidylester (Cardura E 10, eingetragenes Warenzeichen) | 480 | 480 | 480 |
| II | Methacrylsäure | 210 | 200 | 210 |
| | 2-Hydroxyethylmethacrylat | 386 | 386 | 386 |
| | Styrol | 704 | 914 | 704 |
| | Polypropylenglycolmonomethacrylat * | 20 | 20 | 20 |
| | Methylmethacrylat | 200 | -- | 200 |
| | Kaliumhydroxid | 0,1 | 0,2 | 0,1 |
| | Dodecylmercaptan | 10 | 10 | 10 |
| III | Ethoxypropylacetat | 40 | 40 | 40 |
| | tert.-Butyl-per-2-ethylhexanoat | 80 | 80 | 80 |
| Kennzahlen: | | | | |
| Festkörper (%): | | 81,5 | 82,1 | 81,5 |
| Viskosität DIN-4-Becher nach Verdünnung mit Butylacetat auf 60 Gew.-% Festkörper | | 56 Sek. | 74 Sek. | 56 Sek. |
| Säurezahl (bez. a. Festharz): | | 17,5 | 14,7 | 17,5 |
| OH-Zahl (bez. a. Festharz): | | 147 | 146 | 147 |

* mittleres Molekulargewicht von 350 bis 387

Orientierende Untersuchungen haben gezeigt, daß die Herstellung der Copolymerisatlösung auch in Abwesenheit von Carboxy-Epoxy-Katalysatoren unter den angegebenen Bedingungen möglich ist.

Herstellung eines Klarlackes aus der Copolymerisatlösung 1

In einem gereinigten, trockenen Behälter werden 1200 g Butylacetat, 850 g Xylol, 1050 g Gemisch aromatischer Kohlenwasserstoffe (Shellsol A Warenzeichen), 150 g Lichtschutzmittel (Handelsbezeichnung Tinuvin 1130), 100 g Lichtschutzmittel (Handelsbezeichnung Tinuvin 292), 50 g 5%ige Dibutylzinndilaurat-Lösung in Xylol als Beschleuniger und 200 g Verlaufmittel (Handelsname Byk 300 10%ig in Xylol) gründlich vermischt. Anschließend wird 6400 g Copolymerisat-Lösung 1 (zuvor von 81,5 Gew.-% Festkörper durch

Zugabe von Butylglycolacetat/Ethoxypropylacetat/Shellsol®A-Gemisch im Gewichtsverhältnis 1:2:2 auf 80 Gew.-% Festkörper eingestellt) zugegeben und gründlich gemischt. Dann wird 3000 g Lackpolyisocyanat/Desmodur® N 3390 80%ig in Xylol/Butylacetat-Gemisch 1:1 gelöst, dem Ansatz zugefügt und gründlich vermischt und sofort im DIN—4-Becher die Viskosität bestimmt. Durch Verdünnen mit einem Shellsol A/Butylacetat-Gemisch 1:1 wird auf die Spritzviskosität 21 Sekunden Auslaufzeit eingestellt.

Der Festkörper des vorstehenden Klarlackes beträgt 57,1 Gew.-%. Dies bedeutet gegenüber dem Stand der Technik von nur 50,2 Gew. -% Festkörper eine deutliche Verbesserung. Weitere Prüfungen des Klarlackes haben ergeben, daß dieser verbesserte Gebrauchseigenschaften besitzt. Der auf Prüfplatten aufgetragene Klarlack nach dem Abtrocknen 45 Minuten auf 80 °C erhitzt ergab eine Pendelhärte von 116 Sekunden und nach dem Abtrocknen 30 Minuten auf 130 °C erhitzt eine Pendelhärte von 190 Sekunden.

Herstellung eines Weißlackes aus der Copolymerisatlösung 1

In einem gereinigten, trockenen Behälter werden 620 g Shellsol A, 150 g Antiabsetzmittel, bestehend aus 15 g Bentone® 38, 129 g Xylol und 6 g Anti-Terra® U, 50 g Dibutylzinndilaurat 1 Gew.-%ig in Xylol, 2200 g Copolymerisatlösung 1 (wie vorstehend schon angegeben, auf 80 Gew.-% Festkörper verdünnt) und 375 g Benetzungsmittel (Handelsname Byk® 160 30%ig) gut vermischt und unter Rühren wird allmählich 2900 g Weißpigment Titandioxid 2160 zugegeben und in eine Perlmill gegeben. Mit einem Perlverhältnis 1:1 wird 30 Minuten gemahlen. Danach wird der Ansatz mit 1650 g Copolymerisatlösung 1 auf 80-Gew.-% Festkörper eingestellt, 200 g Verlaufmittel (Byk® 344 10gew.-%ig in Xylol), 300 Entlüftungsmittel (Byketol® OK) und 760 g n-Butylacetat versetzt und gut vermischt. Zu diesem Ansatz wird 1800 g Verdünnung Bd 1316 als Lösemittel gegeben und danach unter gutem Rühren 1800 g Lackpolyisocyanat Desmodur N 3390 90%ig zugefügt. Der Festkörper des vorstehenden Weißlackes beträgt 65,9 Gew.-%. Diese Tatsache läßt erkennen, daß die Lacke, die die erfindungsgemäße Copolymerisatlösung enthalten, in kürzerer Zeit als Überzug aufgebracht werden können (z.B. Weglassen von Spritzgängen) und daß der hergestellte Überzug trotzdem volle Gebrauchseigenschaften besitzt und durch die Verkürzung des Spritzganges weniger organische Lösungsmittel an die Umgebung abgegeben werden. Die vorstehend genannte Verdünnung Bd 1316 wird durch vermischen von 2500 g Ethoxypropylacetat, 2500 g n-Butylacetat, 500 g Butoxyl (=3-Methoxy-1-butylacetat), 2500 g Xylol und 2000 g Shellsol A erhalten.
Die Topfzeit des vorstehenden Weißlackes betrug, gemessen als Auslaufzeit im DIN—4-Becher:

| | |
|---|---|
| sofort nach Herstellung gemessen | 21 Sekunden |
| nach 2 Stunden | 25 " |
| nach 4 Stunden | 32 " |
| nach 6 Stunden | 43 " |
| nach 8 Stunden | 65 " |

Stahlplatten beschichtet mit handelsüblichem Füller wurden nach einem Tag mit dem vorstehenden Weißlack überlackiert und 60 Minuten bei 80 °C ausgehärtet. Die Eigenschaften wurden nach 24 Stunden gemessen:

| | | |
|---|---|---|
| Füller | 34 - 39 µm | |
| Lack | 52 - 60 µm | |
| Glanz ∢ 60° | 96 % | gemessen nach DIN 67530 sowie ISO 2813 |
| Pendelhärte | | |
| nach König | 118 " | gemessen nach DIN 53157 oder ISO 1522 |
| Buchholzhärte | 95 " | gemessen nach DIN 53153 oder ISO 2815 |
| Erichsentiefung | 8,1 mm | gemessen nach DIN 53156 oder ISO 1520 |

| | | | |
|---|---|---|---|
| Haftung (Gitterschnitt-Prüfung) | | Gt 0 | gemessen nach DIN 53151 oder ISO 2409 |
| Beständig-keitsprüfung | 5' Xylol | i.0 | |
| | 5' Super bleifrei | i.0 | |

Beständigkeitsprüfungen mit Xylol bzw. Superkraftstoff bleifrei.

Der eingebrannte Film des Weißlackes wurde mit einem mit Xylol bzw. Superkraftstoff bleifrei getränkten Wattebausch im abgedeckten Zustand 5 Minuten belastet. Nach dem Abnehmen des Wattebausches und Abwischen zum Entfernen der Prüfflüssigkeit wurde der trockene belastete Film beurteilt. Bei dem gemessenen Prädikat "in Ordnung" dürfen keine Filmveränderungen vorliegen.

Auswertung der vorstehenden Prüfergebnisse:

Trotz des hohen Feststoffgehaltes des Prüflackes zeigen die gemessenen Werte, daß der Glanz, die Pendelhärte nach König, die Buchholzhärte, die Erichsen-Tiefung, die Gitterschnitt-Prüfung und die Beständigkeitsprüfungen Werte ergeben haben, die sehr guten Handelsprodukten entsprechen, die jedoch den Nachteil haben, daß die Lacke nur einen niedrigeren Festkörpergehalt aufweisen. Jedem Fachmann ist bekannt, daß es mit ansteigendem Festkörpergehalt in Lacken sehr schwierig ist, die geforderten hohen Qualitätsmerkmale überhaupt zu erreichen, so daß die Prüfergebnisse überraschende Eigenschaften anzeigen.

Herstellung eines Klarlackes aus der Copolymerisatlösung 2

In einen gereinigten, trockenen Behälter werden 1200 g Butylacetat, 850 g Xylol, 1050 g Gemisch aromatischer Kohlenwasserstoffe (Shellsol A Warenzeichen), 150 g Lichtschutzmittel (Handelsbezeichnung Tinuvin 1130), 100 g Lichtschutzmittel (Handelsbezeichnung Tinuvin 292), 100 g 5%ige Dibutylzinndilaurat-Lösung in Xylol als Beschleuniger und 200 g Verlaufmittel (Handelsname Byk 300 10%ig in Xylol) gründlich vermischt. Anschließend wird 6400 g Copolymerisat-Lösung 2 (Zuvor von 82,1 Gew.-% Festkörper durch Zugabe von Butylglycolacetat/Ethoxypropylacetat/Shellsol® A-Gemisch im Gewichtsverhältnis 1:2:2 auf 80 Gew.-% Festkörper eingestellt) zugegeben und gründlich gemischt. Dann wird 3000 g Lackpolyisocyanat/Desmodur® N 3390 80%ig in Xylol/Butylacetat-Gemisch 1:1 gelöst, dem Ansatz zugefügt und gründlich vermischt und sofort im DIN—4-Becher die Viskosität bestimmt. Durch Verdünnen mit einem Shellsol® A/Butylacetat-Gemisch 1:1 wird auf die Spritzviskosität 21 Sekunden-Auslaufzeit eingestellt.

Der Festkörper des vorstehenden Klarlackes beträgt 57,1 Gew.-%. Dies bedeutet gegenüber dem Stand der Technik von nur 50,2 Gew.-% Festkörper eine deutliche Verbesserung. Weitere Prüfungen des Klarlackes haben ergeben, daß dieser verbesserte Gebrauchseigenschaften besitzt.

Herstellung eines Weißlackes aus der Copolymerisatlösung 2:

In einen gereinigten, trockenen Behälter werden 620 g Shellsol® A, 150 g Antiabsetzmittel, bestehend aus 15 g Bentone® 38, 129 g Xylol und 6 g Anti Terra® U, 50 g Dibutylzinndilaurat 1 gew.-%ig in Xylol, 2200 g Copolymerisatlösung 2 (wie vorstehend schon angegeben, auf 80 Gew.-% Festkörper verdünnt) und 375 g Benetzungsmittel (Handelsname Byk 160 30%ig) gut vermischt und unter Rühren wird allmählich 2900 g Weißpigment Titandioxid 2160 zugegeben und in eine Perlmill gegeben. Mit einem Perlverhältnis 1:1 wird 30 Minuten aufgemahlen. Danach wird der Ansatz mit 1650 g Copolymerisatlösung 2 (80% Festkörper eingestellt), 200 g Verlaufmittel (Byk® 344 10 gew.%-ig in Xylol), 300 g Entlüftungsmittel (Byketol® OK) und 760 g Butylacetat versetzt und gut vermischt. Zu diesem Ansatz wird 1800 g Verdünnung Bd 1316 als Lösemittel gegeben und danach unter gutem Rühren 1800 g Lackpolyisocyanat Desmodur® N 3390 90%ig zugefügt. Der Festkörper des vorstehenden Weißlackes beträgt 63,4 Gew.-%. Diese Tatsache läßt erkennen, daß die Lacke, die die erfindungsgemässe Copolymerisatlösung enthalten, in kürzerer Zeit als Überzug aufgebracht werden können (z.B.) Weglassen von Spritzgängen) und daß der hergestellte Überzug trotzdem volle Gebrauchseigenschaften besitzt und durch die Verkürzung des Spritzganges weniger organische Lösungsmittel an die Umgebung abgegeben werden.
Die Topfzeit des vorstehenden Weißlackes betrug, gemessen als Auslaufzeit im DIN—4-Becher:

| | |
|---|---|
| sofort nach Herstellung gemessen | 21 Sekunden |
| nach 2 Stunden | 24,5 " |
| nach 4 Stunden | 30 " |
| nach 6 Stunden | 42 " |
| nach 8 Stunden | 56 " |

Stahlplatten beschichtet mit handelsüblichem Füller wurden nach einem Tag mit dem vorstehenden Weißlack überlackiert und 60 Minuten bei 80 °C ausgehärtet. Die Eigenschaften wurden nach 24 Stunden gemessen:

| | | |
|---|---|---|
| Füller | 33 - 38 µm | |
| Lack | 50 - 65 µm | |
| Glanz ∢ 60° | 95 % | gemessen nach DIN 67530 oder ISO 2813 |
| Pendelhärte nach König | 111 " | gemessen nach DIN 53157 oder ISO 1522 |
| Buchholzhärte | 95" | gemessen nach DIN 53153 oder ISO 2815 |
| Erichsen-Tiefung | 8,4 mm | gemessen nach DIN 53156 oder ISO 1520 |
| Haftung (Gitterschnitt-Prüfung) | GT 0-1 | gemessen nach DIN 53151 oder ISO 2409 |
| Beständigkeitsprüfung | 5' Xylol i.O. | |
| | 5' Super, bleifrei i.0 | |

Die vorstehenden Prüfergebnisse zeigen ebenfalls die überraschenden Eigenschaften für die aus dem Weißlack auf Basis der Copolymerisatlösung 2 hergestellten Filme an ,wie dies bereits ausführlich vorstehend bei den Filmen des Weißlackes auf Basis der Copolymerisatlösung 1 nachgewiesen worden ist.

Beschreibung, die Beispiele, die Lacke und die experimentell ermittelten Daten zeigen, daß die eingangs genannten Aufgaben der Erfindung tatsächlich gelöst worden sind.

Bei der Herstellung der Copolymerisatlösungen und der Lacke wurden Handelsprodukte genannt, die hier näher erläutert werden:
Shellsol® A hat einen Siedebeginn bei 166 °C.
Einen Aromatengehalt von 98 Vol.-%
Tinuvin® 1130 ist ein flüssiger UV-Absorber auf Basis eines Hydroxyphenylbenzotriazolderivates. Es ist das Reaktionsprodukt der folgenden 2 Komponenten, welches ein Durchschnittsmolekulargewicht von $M_w > 600$ hat.

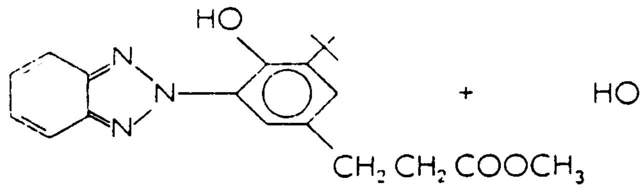

+ $HO(CH_2CH_2O)_nH$

n = 6,7

Methyl-3-[3-(2H-benzotriazol-2-yl)-5-tert.butyl-4-hydroxyphenyl]propionat

Polyethylenglycol 300

⇨ **TINUVIN 1130**

Tinuvin® 292 ist ein flüssiges Lichtschutzmittel. Chemisch wurde TINUVIN® 292 für die Lichtstabilisierung von Industrielacken entwickelt. TINUVIN® 292 gehört zu der Klasse der sterisch gehinderten Amine (HALS). Es hat den Vorteil, nicht empfindlich gegenüber säurekatalysierten Systemen zu sein, die als niedrig eingebrannte Autoreparaturlacke Verwendung finden.

BYK® -300 ist ein Additiv zur Erhöhung der Ritz- und Kratzfestigkeit und es basiert auf einer 50 %igen Lösung eines speziellen, lackverträglichen Polysiloxancopolymers. Hersteller ist die BYK-Chemie GmbH in D-4230 Wesel.

BENTONE® 38 ist ein spezieller, organisch modifizierter Smektit und ein äußerst wirksames rheologisches Additiv. BENTONE® 38 wird vor allem in unpolaren bis mittelpolaren organischen Systemen eingesetzt, in denen sie ihre volle Wirksamkeit entfaltet. Hersteller ist die Kronos-Titan GmbH in D-5090 Leverkusen 1.

ANTI-TERRA-U® ist ein Netz- und Dispergieradditiv zur besseren Pigmentbenetzung, welches als Salz aus ungesättigten Polyaminamiden und höhermolekularen, sauren Estern vorliegt. Hersteller ist die BYK-Chemie GmbH in D-4230 Wesel.

DISPERBYK® -160 ist ein Netz- und Dispergieradditiv für organische Pigmente. Es handelt sich um ein höhermolekulares Copolymer mit funktionellen pigmentaffinen Gruppierungen.

| | |
|---|---|
| Dichte bei 20°C (DIN 51757) | 0,94 - 0,96 g/cm³ |
| Aminzahl | 10 - 12 mg KOH/g |
| Flammpunkt (DIN/ISO 3679) | 24 - 26°C |
| Nichtflüchtige Anteile (ASTM D 1644 B) | ca. 30 % |
| Lösemittel | Xylol/Butylacetat ≙ 6/1 |
| Aussehen | klare bis leicht trübe, schwach gelbliche Flüssigkeit |

Hersteller: BYK-Chemie GmbH

KRONOS® 2160 ist ein nach dem Chloridverfahren hergestelltes Rutilpigment. Es ist mit Aluminium-Siliziumverbindungen und mit organischen Substanzen oberflächenbehandelt.

| | |
|---|---|
| $TiO_2$-Gehalt | 91 % |
| Dichte | 3,9 g/cm³ |
| Relatives Streuvermögen * | 105 % |

* Das relative Streuvermögen wird nach DIN 53165 bei eine PVK von 17 % bestimmt. Das Bezugspigment ist KRONOS 2056.

Nach DIN 55912, Teil 1 und der Norm ISO 591 gehört dieses KRONOS Titandioxid-Pigment in die Gruppe R 2. Hersteller ist die Kronos-Titan-GmbH in D-5090 Leverkusen.

BYK® -344 ist ein Additiv zur Erhöhung der Ritz- und Kratzfestigkeit, welches eine 50 %ige Lösung eines speziellen, modifizierten, lackverträglichen Siloxancopolymers ist.

| | |
|---|---|
| Dichte bei 20°C (DIN 51757) | 0,93 - 0,95 g/cm³ |
| Refraktionszahl (DIN 53491) | 1,463 - 1,468 |
| Nichtflüchtige Anteile (ASTM D1644B) | 48 - 50 % |
| Lösemittel | Xylol/Isobutanol: 4/1 |
| Flammpunkt (DIN/ISO 3679) | 23°C |
| Aussehen | klare bis leicht trübe Flüssigkeit |

Hersteller: BYK-Chemie GmbH

BYKETOL® -OK ist ein auf Basis eines Gemisches hochsiedender Aromaten, Ketone und Ester aufgebautes Verlaufadditiv.

| | |
|---|---|
| Dichte bei 20°C (DIN 51757) | 0,86 - 0,87 g/cm³ |
| Refraktionszahl (DIN 53491) | 1,468 - 1,474 |
| Flammpunkt (DIN/ISO 3679) | 42°C |
| Aussehen | klare bis leicht trübe Flüssigkeit |

Hersteller: BYK-Chemie GmbH

## Patentansprüche

**1.** Copolymerisatlösung, die inerte organische Lösungsmittel und hydroxylgruppenhaltige Copolymerisate auf der Basis von Additionsprodukten $\alpha,\beta$-ungesättigter Carbonsäure mit Glycidylestern und damit mischpolymerisierbarer $\alpha,\beta$-ungesättigter Monomerer mit und ohne Hydroxylgruppen enthält, dadurch gekennzeichnet, daß die Copolymerisatlösung die Komponenten

A) 15,0 - 50,0 Gew.-% von in der Lackindustrie üblichen inerten organischen Lösungsmitteln,

B) 50,0 - 85,0 Gew.-% hydroxylgruppenhaltige Copolymerisate enthält, die erhältlich ist durch gleichzeitige

Additionsproduktbildung und Polymerisation in inerten organischen Lösungsmitteln oder deren Gemischen, die einen Siedebereich zwischen 160 °C bis 200 °C aufweisen, durch Erhitzen unter Rückflußkühlung in Anwesenheit von Polymerisationsinitiatoren, aus

a) 20 bis 30 Gew.-% Glycidylester von $\alpha$-Alkylalkanmonocarbonsäuren und/oder $\alpha,\alpha$-Dialkylalkanmonocarbonsäuren,

b) 8 bis 12 Gew.-% Methacrylsäure,

c) 15 bis 27 Gew.-% Hydroxyalkylmethacrylat mit 1 bis 6-C-Atomen im Hydroxyalkylrest,

d) 30 bis 53 Gew.-% Styrol,

e) 1 bis 5 Gew.-% Polypropylenglycolmonomethacrylat mit einem mittleren Molekulargewicht von 350 bis 387, wobei die Summe der Komponenten a, b, c, d und e jeweils 100 Gew.-% beträgt.

**2.** Copolymerisatlösung nach Anspruch 1, dadurch gekennzeichnet, daß die Komponente B durch Mitverwen dung von

f) 0 bis 20 Gew.-% Alkylmethacrylat mit 1 bis 8 C-Atomen im Alkylrest bei der Polymerisation erhältlich ist, wobei die Summe der Komponenten a, b, c, d, e und f jeweils

100 Gew.% beträgt.

3. Copolymerisatlösung nach Anspruch 1 oder 2, dadurch gekennzeichnet, daß die Komponente B in Anwesenheit von Kettenüberträgern während der Polymerisation erhältlich ist.

4. Copolymerisatlösung nach einem der Ansprüche 1 bis 3, dadurch gekennzeichnet, daß die Komponente B in Anwesenheit von Carboxy-Epoxykatalysatoren während der Polymerisation erhältlich ist.

5. Copolymerisatlösung nach einem der Ansprüche 1 bis 4, dadurch gekennzeichnet, daß die Komponente B aus einem Copolymerisat besteht, welches aus Gemischen, bestehend aus

| | |
|---|---|
| a) 20 bis 30 Gew.-% | Glycidylester von α-Alkylalkanmonocarbonsäuren und/oder α,α-Dialkylalkanmonocarbonsäuren, |
| b) 8 bis 12 Gew.-% | Methacrylsäure, |
| c) 15 bis 26 Gew.-% | 2-Hydroxyethylmethacrylat, |
| d) 33 bis 52 Gew.-% | Styrol |
| e) 1 bis 3 Gew.-% | Polypropylenglycolmonomethacrylat mit einem mittleren Molekulargewicht von 350 bis 387, |
| f) 0 bis 20 Gew.-% | Methylmethacrylat, wobei die Summe der Komponenten jeweils 100 Gew.-% beträgt, |

erhältlich ist.

6. Copolymerisatlösung nach einem der Ansprüche 2 bis 4, dadurch gekennzeichnet, daß die Komponente B aus einem Copolymerisat besteht, welches aus einem Gemisch, bestehend aus

| | |
|---|---|
| a) 20 bis 26 Gew.-% | Glycidylester von α-Alkylalkanmonocarbonsäuren und/oder α,α-Dialkylalkanmonocarbonsäuren, |
| b) 8 bis 12 Gew.-% | Methacrylsäure, |
| c) 17 bis 22 Gew.-% | 2-Hydroxyethylmethacrylat, |
| d) 33 bis 38 Gew.-% | Styrol, |
| e) 1 bis 3 Gew.-% | Polypropylenglycolmonomethacrylat mit einem-mittleren Molekulargewicht von 350 bis 387, |
| f) 8 bis 12 Gew.-% | Methylmethacrylat, wobei die Summe der Komponenten jeweils 100 Gew.-% beträgt, |

erhältlich ist.

7. Copolymerisatlösung nach einem der Ansprüche 1, 3 und 4, dadurch gekennzeichnet, daß die Komponente B aus einem Copolymerisat besteht, welches aus Gemischen, bestehend aus

| | |
|---|---|
| a) 22 bis 25 Gew.-% | Glycidylester von α-Alkylalkanmonocarbonsäuren und/oder α,α-Dialkylalkanmonocarbonsäuren |
| b) 8 bis 12 Gew.-% | Methyacrylsäure, |
| c) 17 bis 21 Gew.-% | 2-Hydroxyethylmethacrylat, |
| d) 44 bis 48 Gew.-% | Styrol, |
| e) 1 bis 3 Gew.-% | Polypropylenglycolmonomethacrylat mit einem mittleren Molekulargewicht von 350 bis 387, wobei die Summe der Komponenten jeweils 100 % beträgt, |

erhältlich ist.

8. Copolymerisatlösung nach einem der Ansprüche 1 bis 7, dadurch gekennzeichnet, daß diese nach ihrer Herstellung aus

| | |
|---|---|
| A) 15,0 - 25,0 Gew.-%, | bevorzugt 15 bis 20 Gew.-%, von in der Lackindustrie üblichen inerten organischen Lösungsmitteln oder deren Gemischen, die einen Siedebereich zwischen 160 °C bis 200 °C aufweisen und |
| B) 75,0 - 85,0 Gew.-% | hydroxylgruppenhaltigen Copolymerisaten besteht. |

9. Copolymerisatlösung nach einem der Ansprüche 4 bis 8 dadurch gekennzeichnet, daß als Carboxy-Epoxy-Katalysator 0,005 Gew.-% bis 0,5 Gew.-% mindestens einer Alkalimetallverbindung, bezogen auf das Gewicht der Additionsprodukt bildenden Komponenten, enthalten ist.

**10.** Copolymerisatlösung nach Anspruch 8, dadurch gekennzeichnet, daß die Komponente A einen Siedebereich zwischen 190 und 200 °C aufweist.

**11.** Copolymerisatlösung nach einem der Ansprüche 1 bis 10, dadurch gekennzeichnet, daß die Komponente A

| | |
|---|---|
| 15,0 bis 25,0 Gew.-%, | bevorzugt 15 bis 20 Gew.-% inerte organische Lösungsmittel mit einem Siedebereich zwischen 160 bis 200 °C, bevorzugt zwischen 190 und 200 °C, enthält. |

**12.** Reaktionslacke zur Herstellung von Überzügen, welche als Bindemittel eine Copolymerisatlösung nach einem der Ansprüche 1 bis 11 und als Härter zwei- und/oder mehrwertiges Polyisocyanat als Komponente C enthalten.

**13.** Reaktionslacke nach Anspruch 12, die 60 bis 80 Gew.-% Copolymerisat B als Bindemittel und 20 bis 40 Gew.-% Komponente C als Härter enthalten.

**14.** Verfahren zur Herstellung der hydroxylgruppenhaltigen Copolymerisatlösungen gemäß einem der Ansprüche 1 bis 12, erhältlich durch Erhitzen eines Gemisches, bestehend aus der Komponente A und dem Monomer a) der Komponente B, als Vorlage im Reaktionsgefäß, in die bei Polymerisationstemperatur entsprechend dem Fortschritt der Polymerisation und gleichzeitig ablaufenden Additionsproduktbildung als Zulauf, man die erforderlichen Monomeren b), c), d), e), gegebenenfalls f), Polymerisationsinitiatoren, gegebenenfalls Kettenüberträger, gegebenenfalls Carboxy-Epoxy-Katalysatoren, allmählich einlaufen läßt und nach Beendigung des Zulaufs - falls erforderlich - noch auf Polymerisationstemperatur hält, bis durch Nachpolymerisation die Umsetzung beendet ist.

**15.** Verfahren nach Anspruch 14, dadurch gekennzeichnet, daß die Komponente A einen Siedebereich zwischen 190 °C und 200 °C aufweist und als Vorlage auf Rückflußtemperatur gehalten wird, und der Zulauf gleichmäßig im Verlauf von 12 bis 20 Stunden zudosiert wird und nach Zulauf-Ende weiter auf Rückflußtemperatur gehalten wird bis die Copolymerisation beendet ist.

**16.** Verfahren nach einem der Ansprüche 14 bis 15 , dadurch gekennzeichnet, daß die Komponente A in einer Menge von 15 bis 25 Gew.-%, bevorzugt 15 bis 20 Gew.-%, eingesetzt wird.

**17.** Verfahren nach einem der Ansprüche 14 bis 16, dadurch gekennzeichnet, daß als Carboxy-Epoxy-Katalysator 0,005 Gew.-% bis 0,5 Gew.-% mindestens einer Alkalimetallverbindung, bezogen auf das Gewicht der Additionsprodukt bildenden Komponenten, eingesetzt wird.

**Claims**

**1.** Copolymer solution containing inert organic solvents and hydroxyl-containing copolymers based on addition products of $\alpha,\beta$-unsaturated carboxylic acid with glycidyl esters and copolymerisable $\alpha,\beta$-unsaturated monomers with and without hydroxyl groups, characterised in that the copolymer solution containing the components

| | |
|---|---|
| A) 15.0-50.0% by weight | of inert organic solvents customary in the paints industry, |
| B) 56.0-85.0% by weight | of hydroxyl-containing copolymers |

and is obtainable by simultaneous addition product formation and polymerisation in inert organic solvents or mixtures thereof with a boiling range between 160 °C and 200 °C by heating under reflux in the presence of polymerisation initiators, from

| | |
|---|---|
| a) 20 to 30% by weight | of glycidyl esters of $\alpha$-alkylalkanemonocarboxylic acids and/or $\alpha,\alpha$-dialkylalkanemonocarboxylic acids, |
| b) 8 to 12% by weight | of methacrylic acid, |
| c) 15 to 27% by weight | of hydroxyalkyl methacrylate having 1 to 6 carbon atoms in the hydroxylalkyl radical, |
| d) 30 to 53% by weight | of styrene, |
| e) 1 to 5% by weight | of polypropylene glycol monomethacrylate having an average molecular weight of 350 to 387, the percentages of components a, b, c, d and e always adding up to 100% by weight. |

2. Copolymer solution according to Claim 1, characterised in that component B is obtainable by using in the polymerization

| | |
|---|---|
| f) 0 to 20% by weight | of alkyl methacrylate having 1 to 8 carbon atoms in the alkyl radical, the percentages of components a, b, c, d, e and f always adding up to 100% by weight. |

3. Copolymer solution according to Claim 1 or 2, characterised in that component B is obtainable in the presence of chain transfer agents during the polymerization.

4. Copolymer solution according to any one of Claims 1 to 3, characterised in that component B is obtainable in the presence of carboxy-epoxy catalysts during the polymerization.

5. Copolymer solution according to any one of Claims 1 to 4, characterised in that component B consists of a copolymer obtainable from mixtures consisting of

| | |
|---|---|
| a) 20 to 30% by weight | of glycidyl esters of $\alpha$-alkylalkanemonocarboxylic acids and/or $\alpha,\alpha$-dialkylalkanemonocarboxylic acids, |
| b) 8 to 12% by weight | of methacrylic acid, |
| c) 15 to 26% by weight | of 2-hydroxyethyl methacrylate, |
| d) 33 to 52% by weight | of styrene, |
| e) 1 to 3% by weight | of polypropylene glycol monomethacrylate having an average molecular weight of 350 to 387, |
| f) 0 to 20% by weight | of methyl methacrylate, the percentages of the components always adding up to 100% by weight. |

6. Copolymer solution according to any one of Claims 2 to 4, characterised in that component B consists of a copolymer obtainable from a mixture consisting of

| | |
|---|---|
| a) 20 to 26% by weight | of glycidyl esters of $\alpha$-alkylalkanemonocarboxylic acids and/or $\alpha,\alpha$-dialkylalkanemonocarboxylic acids, |
| b) 8 to 12% by weight | of methacrylic acid, |
| c) 17 to 22% by weight | of 2-hydroxyethyl methacrylate, |
| d) 33 to 38% by weight | of styrene, |
| e) 1 to 3% by weight | of polypropylene glycol monomethacrylate having an average molecular weight of 350 to 387, |
| f) 8 to 12% by weight | of methyl methacrylate, the percentages of the components always adding up to 100% by weight. |

7. Copolymer solution according to any one of Claims 1, 3 and 4 characterised in that component B consists of a copolymer obtainable from mixtures consisting of

| | |
|---|---|
| a) 22 to 25% by weight | of glycidyl esters of $\alpha$-alkylalkanemonocarboxylic acids and/or $\alpha,\alpha$-dialkylalkanemonocarboxylic acids, |
| b) 8 to 12% by weight | of methacrylic acid, |
| c) 17 to 21% by weight | of 2-hydroxyethyl methacrylate, |
| d) 44 to 48% by weight | of styrene, |
| e) 1 to 3% by weight | of polypropylene glycol monomethacrylate having an average molecular weight of 350 to 387, the percentages of the components always adding up to 100% by weight |

8. Copolymer solution according to any one of Claims 1 to 7, characterised in that, after its preparation, it consists of

| | |
|---|---|
| A) 15.0-25.0% by weight, | preferably 15 to 20% by weight, of customary inert organic paint solvents or mixtures thereof with a boiling range between 160 °C and 200 °C and |
| B) 75.0-85.0% by weight | of hydroxyl-containing copolymers. |

9. Copolymer solution according to any one of Claims 4 to 8, characterised in that the carboxy-epoxy catalyst is 0.005% by weight to 0.5% by weight of at least one alkali metal compound, based on the weight of the components forming the addition product.

10. Copolymer solution according to Claim 8, characterised in that component A has a boiling range between 190 and 200 °C.

11. Copolymer solution according to any one of Claims 1 to 10, characterised in that component A contains 15.0 to 25.0% by weight, preferably 15 to 20% by weight of inert organic solvents having a boiling range between 160 to 200 °C, preferably between 190 and 200 °C.

12. Reactive coatings containing as binder a copolymer solution according to any one of Claims 1 to 11 and as hardener a difunctional or higher polyisocyanate as component C.

13. Reactive coatings according to Claim 12 containing 60 to 80% by weight of copolymer B as binder and 20 to 40% by weight of component C as hardener.

14. Process for preparing the hydroxyl-containing copolymer solutions according to any one of Claims 1 to 12, obtainable by heating a mixture consisting of component A and the monomer a) of component B, as initial charge in the reaction vessel, into which the necessary monomers b), c), d), e), optionally f), polymerisation initiators, optionally chain transfer agents, optionally carboxy-epoxy catalysts are gradually introduced as a stream addition at the polymerisation temperature at the rate of the polymerisation and the simultaneous addition product formation and on completion of the stream addition if necessary maintained at the polymerisation temperature until the reaction has ended.

15. Process according to Claim 14, characterised in that component A has a boiling range between 190 °C and 200 °C and is kept as initial charge at the reflux temperature, and the stream is metered in at a uniform rate over 12 to 20 hours and on completion of the stream addition the batch is maintained at the reflux temperature until the copolymerisation has ended.

16. Process according to either of Claims 14 and 15, characterised in that component A is used in an amount of 15 to 25% by weight, preferably 15 to 20% by weight.

17. Process according to any one of Claims 14 to 16, characterised in that the carboxy-epoxy catalyst used is 0.005% by weight to 0.5% by weight of at least one alkali metal compound, based on the weight of the components forming the addition product.

## Revendications

1. Solution de copolymères contenant des solvants organiques inertes, des copolymères portant des groupes hydroxyle à base de produits d'addition d'acide carboxylique $\alpha,\beta$-insaturé avec des esters glycidyliques et des monomères $\alpha,\beta$-insaturés copolymérisables portant ou non des groupes hydroxyle, caractérisée en ce que dans la solution de copolymère contient les composants suivants :
   A) 15,0 - 50,0 % en poids de solvants organiques inertes utilisés habituellement dans l'industrie des peintures,
   B) 50-85% en poids de copolymères contenant des groupes hydroxyle, ladite solution pouvant être obtenue par des réactions d'addition et de copolymérisation se déroulant simultanément dans des solvants organiques inertes ou leurs mélanges, ayant un domaine d'ébullition compris entre 160 et 200 °C, par chauffage à reflux en présence d'amorceurs de polymérisation, de
      a) 20 à 30 % en poids d'$\alpha$-alkylalcanemonocarboxylates de glycidyle et/ou de $\alpha,\alpha$-dialkylalcanemonocarboxylates de glycidyle,
      b) de 8 à 12 % en poids d'acide méthacrylique
      c) de 15 à 27 % en poids de méthacrylate d'hydroxyalkyle comportant de 1 à 6 atomes de carbone dans le résidu hydroxyalkyle,
      d) de 30 à 53 % en poids de styrène,
      e) de 1 à 5 % en poids de monométhacrylate de polypropylèneglycol ayant une masse moléculaire moyenne comprise entre 350 et 387 , la somme des composants a, b, c, d et e étant égale à 100 % en poids.

2. Solution de copolymères conforme à la revendication 1, caractérisée en ce que le composant B peut être obtenu en utilisant en plus lors de la polymérisation

f) de 0 à 20% en poids de méthacrylate d'alkyle comportant de 1 à 8 atomes de carbone dans le résidu alkyle, la somme des composants a, b, c, d, e et f étant égale à 100%.

3. Solution de copolymères conforme à la revendication 1 ou 2, caractérisée en ce que le composant B peut être obtenu par polymérisation en présence d'agents de transfert de chaîne.

4. Solution de copolymères conforme à une des revendications 1 à 3, caractérisée en ce que le composant B peut être obtenu par polymérisation en présence de catalyseurs de type carboxy-époxyde.

5. Solution de copolymères conforme à une des revendications 1 à 4, caractérisée en ce que le composant B est un copolymère composé d'un mélange contenant
a) de 20 à 30 % en poids d'α-alkyl-alcanemonocarboxylates de glycidyle et/ou de α,α-dialkylalcanemonocarboxylates de glycidyle,
b) de 8 à 12 % en poids d'acide méthacrylique
c) de 15 à 26 % en poids de méthacrylate de 2-hydroxyéthyle,
d) de 33 à 52 % en poids de styrène,
e) de 1 à 3 % en poids de monométhacrylate de polypropylèneglycol ayant une masse moléculaire moyenne comprise entre 350 et 387,
f) de 0 à 20 % en poids de méthacrylate de méthyle, la somme des composants a, b, c, d et e étant égale à 100 % en poids.

6. Solution de copolymères conforme à une des revendications 2 à 4, caractérisée ence que le composant B est un copolymère constitué d'un mélange contenant
a) de 20 à 26% en poids d'α-akylalcanemonocarboxylates de glycidyle et/ou de α,α-dialkylalcanemonocarboxylates de glycidyle,
b) de 8 à 12 % en poids d'acide méthacrylique
c) de 17 à 22 % en poids de méthacrylate de 2-hydroxyéthyle,
d) de 33 à 38 % en poids de styrène,
e) de 1 à 3 % en poids de monométhacrylate de polypropylèneglycol ayant une masse moléculaire moyenne comprise entre 350 et 387,
f) de 8 à 12 % en poids de méthacrylate de méthyle, la somme des composants étant égale à 100 % en poids.

7. Solution de copolymères conforme à une des revendications 1,3 et 4 caractérisée ence que le composant B est un copolymère constitué d'un mélange contenant
a) de 22 à 25 % enpoids d'α-alkylalcanemonocarboxylates de glycidyle et/ou de α,α-dialkylalcanemonocarboxylates de glycidyle,
b) de 8 à 12 % en poids d'acide méthacrylique
c) de 17 à 21 % en poids de méthacrylate de 2-hydroxyéthyle,
d) de 44 à 48 % en poids de styrène,
e) de 1 à 3 % en poids de monométhacrylate de polypropylèneglycol ayant une masse moléculaire moyenne comprise entre 350 et 387, la somme des composants étant égale à 100 % en poids.

8. Solution de copolymères conforme à une des revendications 1 à 7, caractérisée en ce que celle-ci contient, après préparation,
A) de 15 à 25,0% en poids, de préférence de 15 à 20 % en poids de solvants organiques inertes utilisés habituellement dans l'industrie des peintures ou de mélanges de ceux-ci, ayant un domaine d'ébullition compris entre 160 °C et 200 °C, et
B) de 75,0 à 85,0% enpoids decopolymères contenant des groupes hydroxyle.

9. Solution de copolymères conforme à une des revendications 4 à 8 caractérisée en ce qu'elle contient, comme catalyseur de type carboxy-époxyde de 0,005 à 0,5 % en poids d'au moins un composé d'un métal alcalin par rapport au poids des composants formant le produit d'addition.

10. Solution de copolymères conforme à la revendication 8, caractérisée en ce que le composant A a un domaine d'ébullition compris entre 190 et 200 °C.

**11.** Solution de copolymères conforme à une des revendications 1 à 10, caractérisée en ce que le composant A contient

de 15,0 à 25,0 % en poids, de préférence de 15 à 20 % en poids de solvants organiques inertes ayant un domaine d'ébullition compris entre 160 et 200 °C, de préférence entre 190 et 200 °C.

**12.** Laques réactives pour la préparation de revêtements contenant, comme liant, une solution de copolymères conforme à une des revendications 1 à 11 et, comme agent de durcissement, un polyisocyanate bi- et/ou polyfonctionnel comme composant C.

**13.** Laques réactives conformes à la revendication 12 contenant, comme liant, de 60 à 80% en poids de copolymère B et de 20 à 40% en poids de composant comme durcisseur.

**14.** Procédé pour préparer les solutions de copolymère contenant des groupes hydroxyle conformes à une des revendications 1 à 12, que l'on peut obtenir par chauffage d'un mélange contenant le composant A et le monomère a) du composant B, introduits au départ dans le récipient réactionnel, auxquels on ajoute, à la température de polymérisation, au fur et à mesure que la polymérisation et la réaction d'addition simultanée progressent, progressivement les monomères b), c), d), e) et éventuellement f), les amorceurs de polymérisation, éventuellement des agents de transfert de chaîne, éventuellement des catalyseurs de type carboxy-époxyde, et que l'on maintient après l'addition, si nécessaire, à la température de polymérisation jusqu'à ce que la polymérisation soit terminée.

**15.** Procédé conforme à la revendication 14, caractérisé en ce que le composant A présente un domaine d'ébullition compris entre 190 °C et 200 °C, en ce qu'il soit maintenu à la température de reflux en tant que charge initiale et en ce que l'addition se fait régulièrement sur 12 à 20 heures, et en ce que, à la fin de l'addition, le mélange soit maintenu à la température de reflux jusqu'à ce que la copolymérisation soit terminée.

**16.** Procédé conforme à une des revendications 14 à 15, caractérisé en ce que le composant A est utilisé à raison de 15 à 25 % en poids, de préférence de 15 à 20% en poids.

**17.** Procédé conforme à une des revendications 14 à 16, caractérisé en ce que l'on utilise, comme catalyseur de type carboxy-époxyde, de 0,005 à 0,5 % en poids d'au moins un composé d'un métal alcalin, par rapport au poids des composants formant le produit d'addition.